# FASCICULE DE BREVET EUROPEEN

(11) **EP 2 041 186 B1**
(45) Date de publication et mention de la délivrance du brevet: **21.12.2011**
(21) Numéro de dépôt: 07803983.1
(22) Date de dépôt: 06.07.2007
(51) Int. Cl.: C08F 2/44, C08F 2/12, H01L 23/29, B29C 45/00, C08J 3/00, C08K 9/10, C08L 51/00

(54) **PROCEDE D'OBTENTION DE POUDRE A MOULER**
VERFAHREN ZUR HERSTELLUNG VON FORMPULVER
PROCESS FOR PRODUCING MOULDING POWDER

(30) Priorité: 06.07.2006 FR 0652838
(43) Date de publication de la demande: 01.04.2009
(73) Titulaire: Terrisse, Jean, 67100 Strasbourg-Neuhof (FR)
(72) Inventeur: Terrisse, Jean, 67100 Strasbourg-Neuhof (FR)
(74) Mandataire: Rhein, Alain
(86) Numéro de dépôt international: PCT/FR2007/051604
(87) Numéro de publication internationale: WO 2008/003912

(56) Documents cités:
- EP-A1- 0 536 935
- US-B1- 6 534 592

## Description

La présente invention concerne un procédé d'obtention d'une poudre à mouler.

La présente invention entre dans le domaine de la plasturgie, plus particulièrement pour la production de poudre à mouler. L'invention couvre également les composants pour l'obtention de cette poudre ainsi que les produits obtenus à partir d'une telle poudre.

Une telle poudre trouvera son application dans le moulage et l'injection pour la fabrication de pièce. Plus spécifiquement, mais non limitativement, ladite poudre est destinée à la fabrication de pièce en résines par moulage à basse température.

De préférence, ladite poudre à mouler est une composition à base de poudres de résines acryliques fortement chargées. En effet, pour améliorer la résistance et la qualité des pièces moulées, il est d'usage d'intégrer des charges de toute sorte, notamment minérales, dans la composition des poudres.

Un inconvénient de l'ajout de particules minérales réside dans le fait que les résines acryliques combinées aux particules de la charge forment des pièces moins homogènes, en raison de la difficulté à obtenir une répartition uniforme des particules de la charge au sein des résines. En effet, quelle que soient les méthodes employées, les contraintes de moulage ne permettent pas de maintenir les particules de la charge réparties de façon homogène.

De plus, sous l'effet d'un différentiel de tension de surface lesdites particules ont tendance à s'agglomérer aggravant le problème précédemment évoqué et provoquant des défauts dans les pièces moulées. Ces contraintes et défauts augmentent proportionnellement avec la quantité de charge ajoutée à la poudre. Par conséquent, un seuil maximal de charge peut être ajouté à une poudre au-delà duquel l'homogénéité et la qualité de la pièce ne sont plus garanties.

A cela il faut ajouter que le moulage d'une pièce en matière thermodurcissable présente la particularité qu'au moment de la polymérisation il se produit un retrait de la matière qui est inversement proportionnel à la quantité de charge qu'elle contient. Dans la mesure où cette quantité est nécessairement limitée, ce retrait reste dans tous les cas important, de sorte qu'il est très difficile de réaliser des pièces de dimensions régulières, respectant des tolérances serrées.

Ce retrait des résines combiné à une homogénéité médiocre de la matière, engendre encore des contraintes dans ces pièces moulées.

Les procédés connus de fabrication de pièces à partir de poudres chargées consistent généralement à mélanger les charges ou les poudres chargées par incorporation directe de ces dernières dans un polymère fondu, générant les problèmes précédemment évoqués.

Un autre procédé connu est décrit dans le document EP 0 536 935 et concerne la polymérisation en émulsion de particules de polymères encapsulées par un autre polymère toujours en milieu aqueux. Le produit final est récupéré par coagulation ou « spray drying ». Un tel procédé vise au travers d'une polymérisation par émulsion la modification physique de polymères et ne s'adapte aucunement à la production de poudre à mouler.

L'invention a pour but de pallier les inconvénients de l'état de la technique au travers de la production de poudre à mouler. L'invention couvre également les composants pour l'obtention de cette poudre, ainsi que les produits obtenus à partir d'une telle poudre.

Pour ce faire, la présente invention consiste à produire des poudres composites de charges encapsulées dans des résines de polymères.

L'invention a principalement pour but de répartir uniformément la charge au sein de la poudre et par conséquent d'obtenir des pièces homogènes. De plus, au travers du procédé de réalisation de poudre selon l'invention, le pourcentage de charge incorporé dans la matière peut être augmenté considérablement.

Enfin, lors du moulage d'une pièce, cette part importante de particules de charge contenu dans la résine a pour conséquence un moindre retrait de la matière et la possibilité d'obtenir des pièces de dimensions ajustées.

L'invention concerne donc un procédé d'obtention d'une poudre à mouler, caractérisé en ce qu'il consiste à :
- procéder à l'encapsulation de particules d'au moins une charge au travers de la polymérisation radicalaire d'au moins un monomère en présence d'au moins une charge, ladite charge se présentant sous forme d'une poudre dispersée dans un liquide solvant dudit monomère et non solvant du polymère à obtenir, ledit solvant étant un hydrocarbure et ledit polymère étant défini de nature infusible et/ou insoluble dans son monomère;
- séparer, notamment par centrifugation, filtration ou décantation, ledit liquide non soluble dudit polymère ;
- sécher ledit polymère de manière à obtenir une première poudre de charges encapsulées ;
puis :
- réitérer les étapes précédentes de manière à obtenir au moins une deuxième poudre de polymère défini fusible et/ou soluble dans son monomère ; et
- mélanger lesdites première et deuxième poudres.

L'invention concerne aussi une poudre à mouler issue du procédé précédent, caractérisée par le fait qu'elle comprend au moins deux poudres, d'une part, une première poudre de charges encapsulées dans un polymère infusible et/ou insoluble et, d'autre part, une deuxième poudre de polymère fusible et/ou soluble dans son monomère.

L'invention concerne encore un procédé de fabrication de pâte à mouler comprenant une telle poudre à mouler, dans laquelle on ajoute un solvant du polymère de la deuxième poudre, qui est un monomère ou un mélange de monomères, de manière à obtenir un mastic apte à être moulé sous pression.

D'autres caractéristiques et avantages de l'invention ressortiront de la description détaillée qui va suivre des modes de réalisation non limitatifs de l'invention.

La présente invention concerne l'obtention d'une poudre à mouler, en particulier le procédé de fabrication d'une poudre à mouler à partir de plusieurs poudres de charges encapsulées.

Une caractéristique de l'invention réside dans l'utilisation de poudres complémentaires entre elles. Cette compatibilité se traduit par une homogénéité qui assure une cohésion entre les composants au niveau du matériau finalement obtenu après moulage. « Compatibles entre eux » signifie que les polymères des différentes poudres forment une seule phase, au sens thermodynamique du terme, et qu'ils sont parfaitement adhérents l'un à l'autre.

Plus spécifiquement, au moins une première poudre est chargée. Cette charge se présente sous forme de particules, ces dernières pouvant être de tout type, notamment minéral, cellulosique, organique, polymère, en matériau synthétique ou tout autre type. Cette charge peut aussi se présenter sous la forme de métaux d'oxydes de carbure. Elles peuvent aussi être constituées d'un matériau fissible, par exemple de l'uranium, du plutonium ou autre. Préférentiellement, les charges peuvent être constituées en tout ou partie par des composés comportant une grande quantité de pneus recyclés.

Plus particulièrement, selon différents modes de réalisation, les charges peuvent indifféremment être issues de tout type de minéral naturel réduit en poudre. De préférence, ce minéral est insoluble dans l'eau. La charge sera obtenue par pulvérisation de roche ou minerai naturel de manière à obtenir des particules d'une granulométrie choisie, comprise entre 1 et 100 µm. A titre d'exemple, la charge peut être obtenue à partir de marbre, talc, silice, sables, feldspath, barytine, roches, argiles, bentonites, terres diatomées, etc.

La charge peut aussi comprendre des particules obtenues par traitement de minéraux naturels, tels que des oxydes de fer, titane, zinc, étain, plomb, bismuth, zirconium ou tout autre type d'oxyde de métal ou métalloïde. Ces charges peuvent aussi être des carbonates, tel du magnésium, du calcium, du baryum ou leur mélange naturel ou de précipitation. La charge peut encore comprendre des silicates naturels, des sulfates de calcium et de baryum, naturels ou de synthèses.

La charge peut aussi comprendre des composés non cristallins tels des verres, des poudres de basalte fondu, de la silice, mais aussi par des matériaux de grande dureté comme l'alumine, les corindons et les carbures.

Tout type de composant peut être envisagé dans la charge pour conférer des caractéristiques à la pièce ainsi obtenue. De préférence, la charge doit être inerte de sorte qu'elle ne réagisse pas avec les composants chimiques desdites poudres à obtenir.

Selon un autre mode de réalisation, la poudre à mouler selon l'invention comprend un mélange d'au moins deux poudres obtenues par polymérisation. Plus particulièrement, mais non limitativement, une première poudre est obtenue par polymérisation radicalaire d'au moins un monomère en présence d'une charge. Au travers de cette étape, on procède à l'encapsulation des particules de la charge. On notera à ce propos qu'une charge peut être composée ici de plusieurs types de particules, minérales ou autre.

Cette étape d'encapsulation réside dans la polymérisation radicalaire d'au moins un monomère en présence d'au moins une charge, ladite charge se présentant sous forme d'une poudre micronique dispersée dans un liquide solvant dudit monomère et non solvant du polymère à obtenir.

De plus, la première poudre comporte un polymère défini de nature infusible et/ou insoluble dans son monomère. Elle est obtenue après avoir séparé, par centrifugation ou tout autre moyen, ledit liquide non solvant dudit polymère, puis avoir séché ledit polymère de manière à obtenir une poudre de charges encapsulées.

On notera que le polymère obtenu n'est jamais soluble dans le liquide de préparation. Ce liquide de préparation est un dérivé pétrolier non aromatique et peut être, avantageusement mais non limitativement, un alcane ou mélange d'alcanes. Toutefois, le liquide de préparation est choisi de sorte que tous les monomères y soient solubles.

Selon le mode de réalisation, des polymères solubles peuvent être ajoutés au solvant, dans une teneur de 2 à 10% avant l'ajout de la charge ou d'un monomère ou mélange de monomère, conférant différente caractéristique, par exemple une résistance ou une élasticité accrue lors d'ajout de caoutchouc. On notera aussi que le monomère peut contenir une proportion de 2 à 10% d'élastomère.

Ces additifs polymères solubles à ajouter au solvant des monomères peuvent avantageusement être non réticulés, du type utilisé pour la production d'élastomère. Par exemple et non limitativement, ces additifs peuvent être des copolymères élastomères statistique ou à bloc du butadiène et du styrène, copolymères élastomères statistique ou à bloc de l'isoprène et du styrène ainsi que des copolymères élastomères d'éthylène et de propylène et de diène. De manière générale, ces additifs peuvent être composé d'un monomère ou mélange de monomères dont la température de transition est inférieure à 0°C et qui soient soluble dans les hydrocarbures et réticulables par voie radicalire.

L'étape de polymérisation est réitérée de manière à obtenir au moins une deuxième poudre de polymère défini soluble dans son monomère ou fusible. Les poudres sont alors mélangées entre elles. De préférence, les première et deuxième poudres engendrées sont mélangées dans des proportions respectives comprises entre 20 et 80 %. Ce rapport entre les différentes poudres est fonction des caractéristiques souhaitées pour le produit final. Le mélange est fait aisément avant filtration des deux suspensions de particules.

On notera aussi que les polymères peuvent être des homopolymères ou des copolymères. Le monomère solvant peut, quant à lui, être un monomère ou mélange de monomères acryliques et/ou méthacryliques et/ou styréniques et/ou vinyliques.

Le but de l'invention est, au cours de deux étapes successives identiques, d'obtenir une première et une deuxième poudre de sorte que, d'une part, le polymère de la première poudre est obtenu de manière à être infusible et/ou insoluble dans son monomère et, d'autre part, le polymère de la deuxième poudre est obtenu de manière à être soluble dans son monomère ou fusible. De plus, le polymère de la deuxième poudre est prévu compatible avec le polymère de la première poudre.

Par conséquent, deux types de polymères sont déposés sur les charges. Un premier type de polymère est réticulé et insoluble dans tout solvant. Toutefois, en présence de certains solvants, ce polymère peut gonfler, en particulier dans ses monomères. Par contre, ce polymère est infusible, se décomposant avant liquéfaction.

Un second type de polymères est linéaire ou faiblement branché. Il est choisi fortement soluble dans divers solvant et en particulier dans ses monomères. Il est aussi fusible, en particulier il peut être choisi fusible à une température de 120 °C à 170°C selon les monomères.

En résumé, tous ces polymères peuvent être des copolymères des divers monomères tout en conservant leur caractère respectif infusible ou fusible au sein de leur monomère ainsi que le fait qu'ils soient insolubles dans leur liquide de polymérisation.

La poudre à mouler selon l'invention est obtenue par mélange d'au moins deux de ces poudres aux caractéristiques complémentaires. Un solvant monomère peut être ajouté pour obtenir une pâte à mouler. Ce solvant est un monomère (ou mélange de monomères solvant susceptible de former un produit réticulé) du polymère de la deuxième poudre pour l'obtention d'un mastic apte à être moulé sous pression à froid. En particulier, le pressage dudit mastic peut s'effectuer sous une pression de 200 à 1000 kPa. Ce mastic peut aussi être injecté. En d'autres termes, lors du mélange des deux poudres, la partie soluble de la deuxième poudre sert d'agent de liaison à la première poudre, tel une colle. Cette fraction soluble permet, au travers du caractère non cohésif de la première poudre, la fabrication d'un mastic homogène, uniforme et facile à presser. De plus, ce mastic est avantageusement formulé de manière à ce que le produit obtenu après moulage soit infusible et apte à être démoulé.

Selon un mode particulier de réalisation, la charge encapsulée de manière à réaliser la seconde poudre est constituée au moins en partie par la première poudre. En effet, après réalisation d'une première poudre par radicalisation de charge, on en capsule à nouveau les particules de cette première poudre. Outre l'économie d'un réacteur, l'homogénéité de la poudre est augmentée.

De même, la poudre à mouler selon l'invention peut être composée d'un mélange d'une première poudre et d'une deuxième poudre, la deuxième poudre contenant au moins en partie des charges encapsulées sous forme des particules de la première poudre.

Selon un mode de réalisation, l'invention consiste à réaliser des poudres à mouler sur une base acrylique.

Dans un premier temps, on traite des particules de charge minérale par encapsulation avec un polymère acrylique, comme du polyméthacrylate de méthyle usuellement « PMMA », ce dernier est polymérisé de manière à obtenir un polymère de forte masse molaire. De même le PMMA est réticulé et déposé sur la surface des particules de la charge.

De même, on traite des particules de charge, de même nature ou de type différent que la charge précédente ou encapsulée dans une des étapes précédentes, par encapsulation avec un polymère acrylique réticulé en surface des particules de la charge mais qui est traité de manière à recouvrir d'une seconde couche le polymère non réticulé.

Les charges, traitées en surface par encapsulation avec des PMMA copolymères modifiés, comportent des groupements fonctionnels réactifs, tel des hydroxyles, des acides, des époxydes ou des anhydrides.

La poudre est ensuite obtenue au travers d'un système de dispersion non aqueuse de charges traitées dans un produit solvant des monomères et non solvant des polymères en formation.

Appliqué à un exemple de réalisation, dans le cadre de charges de type carbonate de calcium dont la densité massique est de 2,7 kg/L, les charges enduites d'un PMMA sont déposées en quantité comprise entre 30 et 150% du volume initial des particules minérales pour obtenir une composition finale telle que la fraction minérale représente 50 à 90% en poids. Ces charges sont enduites par deux couches de « PMMA », l'une réticulée, l'autre non réticulée, en proportions volumiques organiques relatives à la fraction volumique minérale comprises entre 20 et 200%.

Au cours de la préparation des poudres, ces dernières sont dispersées dans un liquide solvant des monomères utilisés préalablement pour les polymérisations. Par contre, ce liquide n'est pas solvant des polymères à obtenir ni n'est soluble dans ces polymères à plus de 10% dans les conditions de synthèse. De plus, ce liquide a une température d'ébullition permettant un séchage de la poudre dans des conditions de température et de pression compatibles avec la stabilité des polymères à obtenir. Il a aussi une densité permettant une séparation aisée par décantation de la charge non traitée. Avantageusement, ce liquide de préparation est indéfiniment recyclable. Selon le mode de réalisation, peuvent être utilisés des alcanes ou hydrocarbures en C₆ à C₁₂, préférentiellement C₈ et C₉, avec un point d'ébullition < 180°C.

Selon un mode de réalisation préférentiel, ce liquide est un hydrocarbure, notamment non aromatique, de point éclair compris entre -10 et +70°C. Dans un exemple de réalisation, ce liquide est un hydrocarbure aliphatique de point éclair inférieur à 55°C.

Au cours de la préparation, on introduit dans ledit liquide de préparation 1000 g/L de poudre minérale sous agitation, puis 50 à 500 grammes de monomères tous solubles dans ledit liquide. Un initiateur est alors ajouté pour amorcer la polymérisation radicalaire desdits monomères dissous dans des conditions de températures connues de manière générale par l'homme de l'art.

Cette étape est réalisée sous agitation constante de manière à éviter toute sédimentation de la charge pendant la polymérisation.

Au terme de cette réaction, est obtenue une masse de composition de type fluide, spongieuse à quasi-liquide en fonction des quantités de charge et de monomère ajoutées. Cette masse est décantée, centrifugée ou filtrée, de manière à recycler le liquide de préparation, puis séchée par évaporation sous vide et à chaud, avec ou sans extraction à la vapeur selon le point d'ébullition.

La poudre ainsi obtenue possède une densité apparente voisine de 30% de la densité apparente de la poudre minérale initiale.

Selon un autre mode de réalisation, le mélange des deux suspensions soluble et insoluble peut être traité identiquement par centrifugation/filtration sans séchage.

De cette manière, sont obtenues deux poudres, une première à polymère infusible et insoluble dans son monomère, une deuxième revêtue d'un polymère de même nature chimique que la première poudre, mais soluble dans son monomère ou fusible. Ces deux poudres, qui comprennent des particules de charge différentes en nature et en concentration, sont mélangées dans des proportions comprises entre 20 et 80%.

En fonction des propriétés attendues, les monomères seront choisis dans la famille des acryliques parmi les composés donnant des polymères à faible compatibilité avec les hydrocarbures, tels les acrylates de méthyle, éthyle, 2éthoxy éthyle, hydroxyéthyle, nitrile, isobornyle. Ils peuvent aussi être choisis dans la famille des méthacrylates, tels les esters de méthyle, éthyle 2éthoxyétyle, hydroxyéthyle, nitrile, isobornyle. De tels monomères utilisés dans des proportions supérieures à 2% par rapport au total des monomères utilisés sont désignés comme des composés principaux.

Ces acryliques peuvent aussi être copolymérisés avec des composés styrénique tels le styrène, les vinyltoluènes étant ajoutés en proportion telles que les polymères obtenus restent insolubles dans l'hydrocarbure de préparation.

En plus des monomères utilisés précédemment, seront utilisés des monomères polyfonctionnels acryliques, allyliques ou vinyliques, utilisés seuls ou en mélange, par exemple le diméthacrylate d'éthylène glycol ou de diéthyleneglycol, un mélange des isomères de divinylbenzène ou encore le méthacrylate d'allyle, le triallylcianurate étant des polyfonctionnels de ce type.

Suit une liste non exhaustive des monomères qui peuvent être avantageusement utilisés.

Parmi les acrylates les monomères peuvent être avantageusement mais non limitativement un : allyl ester; anhydride; benzyl ester; 2-butoxyethyl ester; t-butyl ester; 2-cyano- butil, ester; 2-cyano-, ethyl ester; 2-(2-ethoxyethoxy)ethyl ester; 2-ethoxyethyl ester; glycidyl ester; 4-hydroxybutyl ester; 2-hydroxyethyl ester; 2-hydroxy-3-phenoxypropyl ester; 2-hydroxypropyl ester; isopropyl ester; 1H,1H-pentadecafluoropropyl ester; 2,2,3,3,3-pentafluoropropyl ester; 2-phenoxyethyl ester; 2-phenyl ester d'acrylate.

Parmi les méthacrylates les monomères peuvent être avantageusement mais non limitativement un : allyl ester; anhydride; benzyl ester; 2-butoxyethyl; 1H,1H,7H-dodecafluoroheptyl ester; 4-ethoxybutyl ester; 2-ethoxyethyl ester; glycidyl ester; 1H,1H,2H,2H-heptadecafluorodecyl ester; 1H,1H-heptafluorobutyl ester; 4-hydroxybutyl ester; 2-hydroxyethyl ester; isobutyl ester; 2-methoxuethyl ester; 2-phenoxyethyl ester; vinyl ester de méthacrylate.

Les monomères peuvent aussi être difonctionnels comme un : 1,4-butylene diester; 2-butylene-1,4 diester; 1,5-pentanediol diester; 1,3-propylene glycol diester; tetra(ethylene glycol) diester; trimethylolpropane triester; tri(propylene glycol) diester; 1,4-cyclohexanediol diester; nona(ethylene glycol) diester; nona(propylene glycol) diester.

Selon les produits à obtenir, divers ingrédients peuvent être additionnés comme des pigments minéraux ou organiques, des accélérateurs de type amines tertiaire, des amorceurs radicalaires, des cires oxydées ou non, des agents démoulants, des stabilisants, des fongicides, des charges à fonction spécifiques telle de la chaux ou des oxydes de magnésium. Peut être aussi ajouté tout type de produit, tel des produits tension actif, fluidifiants, plastifiants ou additifs dit à faible retrait, apte à ajuster la consistance mais n'interférant pas avec la polymérisation ultérieure du mastic. Ces additifs fonctionnels sont minoritaires, ajoutés à des taux réduits de 0,1 à 5% de la masse total du mastic.

A ces poudres formulées est ensuite ajoutée une quantité de monomère soluble dans les polymères déposés sur les charges. La quantité minimale déposée correspond à une prise en masse de la poudre qui se transforme en une pâte friable dès 15% d'addition en poids. Le mélange devient alors souple entre 15 et 25% de monomères ajoutés. Enfin, on obtient un fluide d'état plus ou moins visqueux pour un taux d'addition supérieur à 30%, pouvant aller jusqu'à l'état liquide.

Les monomères ajoutés contiennent de préférence des monomères plurifonctionnels ou polyfonctionnels ainsi qu'un initiateur susceptible de réagir avec un éventuel accélérateur ajouté préalablement.

La technique de préparation de la poudre s'effectue dans un pétrin ou tout autre appareil, tel un mélangeur à sonde, permettant le débullage de la poudre. La pâte est ensuite travaillée sous toute forme, en particulier sous la forme de feuilles ou de plaques. Dans cette forme, plusieurs feuilles peuvent être superposées et entre lesquelles peuvent être intercalés des mats de verre, textiles de renfort ou autre, ce avant mise en forme et durcissement complet du produit ou de la pièce à obtenir.

L'invention trouvera une application toute particulière dans la fabrication de pièces à parois minces en résines acryliques. Ces pièces ont une résistance accrue par rapport à des plaques thermoformées. Elle concerne aussi la fabrication de pièces à parois minces par moulage en compression de résines acryliques thermodurcissables donnant un aspect minéral de pierre reconstituée, préparées sous forme de plaque pour moulage ou se présentant sous forme de feuille renforcé de fibre de verre, sous forme de mat à fils coupés ou continus.

Du fait du fort taux de charge et de l'encapsulation de chacune de ses particules ainsi que du faible taux de monomère nécessaire pour obtenir le mastic, l'invention confère l'avantage de pouvoir mouler des pièces avec des monomères à fort retrait de polymérisation, tout en obtenant des produits finis d'une très grande rigidité et ayant une très bonne tolérance dimensionnelle.

## Revendications

1. Procédé d'obtention d'une poudre à mouler, **caractérisé en ce qu'**il consiste à :
- procéder à l'encapsulation de particules d'au moins une charge au travers de la polymérisation radicalaire d'au moins un monomère en présence d'au moins une charge, ladite charge se présentant sous forme d'une poudre dispersée dans un liquide solvant dudit monomère et non solvant du polymère à obtenir, ledit solvant étant un hydrocarbure et ledit polymère étant défini de nature infusible et/ou insoluble dans son monomère;
- séparer, notamment par centrifugation, filtration ou décantation, ledit liquide non soluble dudit polymère ;
- sécher ledit polymère de manière à obtenir une première poudre de charges encapsulées ;
puis :
- réitérer les étapes précédentes de manière à obtenir au moins une deuxième poudre de polymère défini fusible et/ou soluble dans son monomère ; et
- mélanger lesdites première et deuxième poudres.

2. Procédé d'obtention selon la revendication 1, **caractérisé par le fait que** ledit monomère est un monomère ou mélange de monomères acryliques et/ou méthacryliques et/ou styréniques et/ou vinyliques.

3. Procédé selon l'une quelconque des revendications 1 ou 2, **caractérisé par le fait que** la charge encapsulée de manière à obtenir la deuxième poudre de polymère fusible et/ou soluble dans son monomère est constituée au moins en partie par la première poudre.

4. Procédé d'obtention selon l'une quelconque des revendications 1 à 3, **caractérisé par le fait que** lesdites première et deuxième poudres sont mélangées dans des proportions comprises entre 20 et 80 %.

5. Procédé d'obtention selon l'une quelconque des revendications précédente, **caractérisé par le fait que** les polymères desdites poudres sont choisis compatibles entre eux.

6. Procédé d'obtention selon l'une quelconque des revendications précédentes, **caractérisé par le fait que** la charge est composée de particules minérales, cellulosiques, organiques, synthétiques ou fissibles.

7. Poudre à mouler issue du procédé selon l'une quelconque des revendications précédentes, **caractérisée par le fait qu'**elle comprend au moins deux poudres, d'une part, une première poudre de charges encapsulées dans un polymère infusible et/ou insoluble et, d'autre part, une deuxième poudre de polymère fusible et/ou soluble dans son monomère.

8. Poudre à mouler selon la revendication 7, **caractérisé par le fait que** lesdites première et deuxième poudres sont présentes dans des proportions comprises entre 20 et 80 %.

9. Procédé de fabrication de pâte à mouler comprenant la poudre à mouler selon la revendication 8, **caractérisé en ce qu'**il consiste à ajouter à ladite poudre à mouler, un solvant du polymère de la deuxième poudre, qui est un monomère ou un mélange de monomères, de manière à obtenir un mastic apte à être moulé sous pression.

## Claims

1. Method for producing a moulding powder, wherein the process consists in:
- proceeding to capsulate particles of at least one filler through radical polymerisation of at least one monomer in the presence of at least one filler, said filler being in the form at a powder dispersed in a liquid dissolving said monomer and not dissolving the polymer to be obtained, said dissolvent being a hydrocarbon and said polymer being defined of a type non-melting and/or insoluble in its monomer;
- separating, in particular through centrifuging, filtering or settling, said non-soluble liquid from said polymer;
- drying said polymers, so as to obtain a first powder with capsulated fillers;
then:
- repeating the preceding steps, so as to obtain at least a second polymer powder defined as melting and/or soluble in its monomer; and
- mixing said first and second powders.

2. Method for producing according to claim 1, wherein said monomer is a monomer or a mixture of acrylic and/or methacrylic and/or styrene and/or vinyl monomers.

3. Method according to any of claims 1 or 2, wherein the filler capsulated so as to obtain the second polymer powder fusible and/or soluble in its monomer is formed at least partially of the first powder.

4. Method for producing according to any of claims 1 to 3, wherein said first and said second powder are mixed in proportions between 20 and 80%.

5. Method for producing according to any of the preceding claims, wherein the polymers of said powders are chosen so as to be compatible with each other.

6. Method for producing according to any of the preceding claims, wherein the filler is comprised of mineral, cellulosic, organic, synthetic or fissionable particles.

7. Moulding powder resulting from the method according to any of the preceding claims, wherein the powder comprises at least two powders: on the one hand, a first powder with capsulated fillers in a non-melting and/or insoluble polymer, and, on the other hand, a second polymer powder melting and/or soluble in its monomer.

8. Moulding powder according to claim 7, wherein said first and said second powder are present in proportions between 20 and 80%.

9. Method for producing a moulding paste, comprising the moulding powder according to claim 8, wherein it consists in adding to said moulding powder a dissolvent for the polymer of the second powder, which is a monomer or a mixture of monomers, so as to obtain a mastic capable of being moulded under pressure.

## Patentansprüche

1. Verfahren zur Herstellung eines Presspulvers, **dadurch gekennzeichnet, dass** es aus den folgenden Schritten besteht:
- Durchführen von Verkapselung der Partikel zumindest eines Füllmittels durch radikalische Polymerisation von zumindest einem Monomer im Vorhandensein von zumindest einem Füllmittel, wobei das besagte Füllmittel in Form von einem Pulver vorliegt, das in einer Flüssigkeit dispergiert ist, die ein Lösungsmittel des besagten Monomers und kein Lösungsmittel des zu erhaltenden Polymers darstellt, wobei das besagte Lösungsmittel ein Kohlenwasserstoff sei und das besagte Polymer nicht schmelzbar und/oder nicht lösbar in seinem Monomer sei;
- Trennen der besagten nicht löslichen Flüssigkeit von dem besagten Polymer, insbesondere durch Zentrifugieren, Filtrieren oder Dekantieren;
- Trocknen des besagten Polymers, derart, um ein erstes Pulver mit verkapselten Füllmitteln zu erhalten;
anschließend:
- Wiederholen der vorgehenden Arbeitsschritte, derart, um zumindest ein zweites Polymerpulver zu erhalten, das schmelzbar und/oder lösbar in seinem Monomer ist; und
- Vermischen des besagten ersten und des besagten zweiten Pulvers miteinander.

2. Herstellungsverfahren nach Anspruch 1, **dadurch gekennzeichnet, dass** das besagte Monomer ein Monomerstoff oder ein Gemisch aus Acryl- und/oder Methacrylund/oder Styren- und/oder Vinylmonomeren ist.

3. Verfahren nach irgendeinem der Ansprüche 1 oder 2, **dadurch gekennzeichnet, dass** das Füllmittel, das derart verkapselt wurde, um das zweite Polymerpulver zu bilden, das schmelzbar und/oder lösbar in seinem Monomer ist, zumindest zum Teil durch das erste Pulver gebildet ist.

4. Herstellungsverfahren nach irgendeinem der Ansprüche 1 bis 3, **dadurch gekennzeichnet, dass** das besagte erste und das besagte zweite Pulver miteinander in einem Verhältnis vermischt werden, das zwischen 20 und 80% liegt.

5. Herstellungsverfahren nach irgendeinem der vorgehenden Ansprüche, **dadurch gekennzeichnet, dass** die Polymere der besagten Pulversubstanzen miteinander mischbar gewählt sind.

6. Herstellungsverfahren nach irgendeinem der vorgehenden Ansprüche, **dadurch gekennzeichnet, dass** das Füllmittel aus mineralischen, zellulosehaltigen, organischen, synthetischen oder spaltbaren Partikeln besteht.

7. Presspulver, hergestellt nach dem Verfahren nach irgendeinem der vorgehenden Ansprüche, **dadurch gekennzeichnet, dass** es zumindest zwei Pulversubstanzen umfasst: einerseits, ein erstes Pulver mit verkapselten Füllmitteln in einem nicht schmelzbaren und/oder nicht lösbaren Polymer, und, andererseits, ein zweites Polymerpulver, das schmelzbar und/oder lösbar in seinem Monomer ist.

8. Presspulver nach Anspruch 7, **dadurch gekennzeichnet, dass** das besagte erste und das besagte zweite Pulver in Anteilen zueinander vorhanden sind, die zwischen 20 und 80% liegen.

9. Verfahren zur Herstellung eines Pressteigs, umfassend das Presspulver nach Anspruch 8, **dadurch gekennzeichnet, dass** es darin besteht, zu dem besagten Presspulver ein Lösungsmittel des Polymers des zweiten Pulvers hinzuzufügen, das ein Monomer oder ein Gemisch aus Monomeren ist, derart, um eine Mastixmasse zu erhalten, die geeignet ist, um unter Druck gepresst zu werden.
